(19) Europäisches Patentamt
European Patent Office
Office européen des brevets

(11) **EP 1 760 369 A2**

(12) **EUROPEAN PATENT APPLICATION**

(43) Date of publication:
07.03.2007 Bulletin 2007/10

(51) Int Cl.:
*F16H 55/54* *(2006.01)*

(21) Application number: 06018085.8

(22) Date of filing: 30.08.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 02.09.2005 US 218867

(71) Applicant: **Eaton Corporation**
**Cleveland, Ohio 44114-2584 (US)**

(72) Inventors:
• **Shamis, Dmitry A.**
**Oakland, MI 48382 (US)**
• **Creager, Christopher W.**
**Washtenaw, MI 48197 (US)**

(74) Representative: **Rüger, Barthelt & Abel**
**Patentanwälte**
**Postfach 10 04 61**
**73704 Esslingen a.N. (DE)**

(54) **Variable belt drive pulley and variable drive system**

(57) A variable drive apparatus (10) is disclosed. The variable drive apparatus includes a hub about an axis (A) and a plurality of sectors (18) that are movable in a radial direction relative to the axis (A). The position of the sectors (18) relative to the axis (A) can, among other things, change a drive ratio associated with the apparatus. A variable drive system is also disclosed.

FIG. 1

Printed by Jouve, 75001 PARIS (FR)

**Description**

## FIELD OF THE DISCLOSURE

The present invention relates generally to a variable drive apparatus, including a drive apparatus with radially expandable and contractible sectors.

## BRIEF DESCRIPTION OF THE DRAWINGS

Embodiments of the disclosure will now be described, by way of example, with reference to the accompanying exemplary drawings, wherein:

Figure 1 is an exploded perspective view of an apparatus according to an embodiment of the invention;

Figure 2 is an assembled, perspective view of the apparatus illustrated in Figure 1;

Figure 3 is a perspective view of the apparatus illustrated in Figure 2 shown with a sector and a side plate removed;

Figure 4 is an end view of the apparatus illustrated in Figure 2;

Figure 5 is a cross-sectional view of the apparatus illustrated in Figure 2 taken along line 5-5;

Figure 6 is a side view of an apparatus of the type illustrated in Figure 2 shown connected to another device via a belt;

Figure 7A is an enlarged side view of the apparatus illustrated in Figure 6 with a segment of the associated belt;

Figure 7B is an enlarged side view of the apparatus illustrated in Figure 7A with sectors of the apparatus shown in an expanded, radially-outward position;

Figure 8A is a side view of the belt and apparatus as shown in Figure 7B with a side plate removed; and

Figure 8B is a side view of a belt and apparatus of another embodiment of the invention, the apparatus shown with a side plate removed.

## DETAILED DESCRIPTION

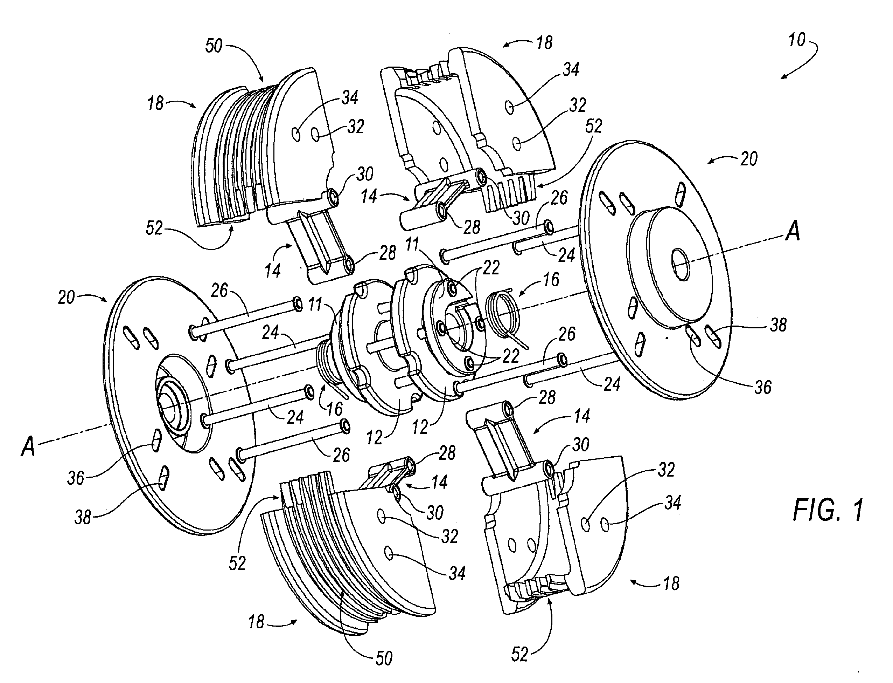

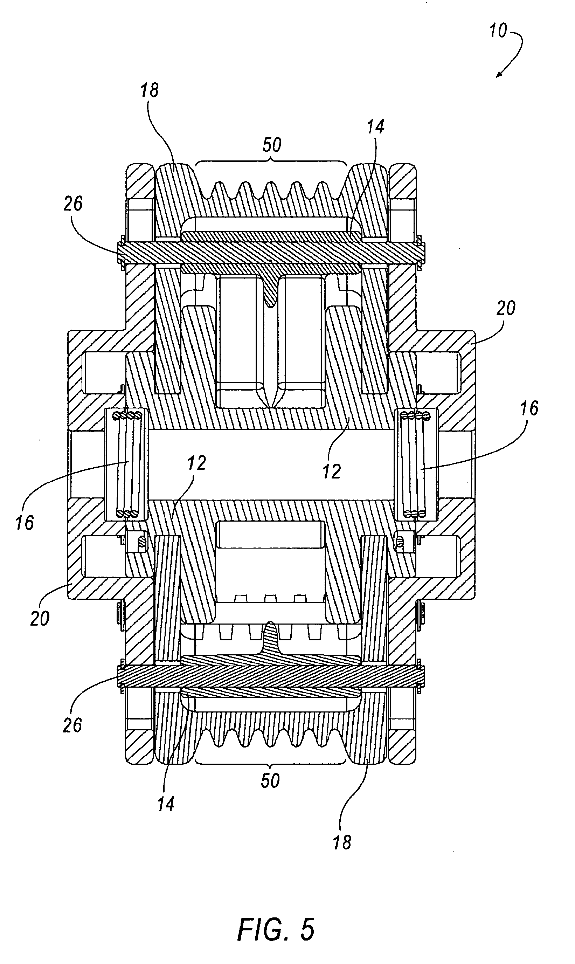

A variable drive apparatus according to an embodiment of the invention is generally illustrated in Figures 1-5. The variable drive apparatus 10 may be used in connection with a number of applications. For example, without limitation, the apparatus may be used in connection with a supercharger for a vehicle.

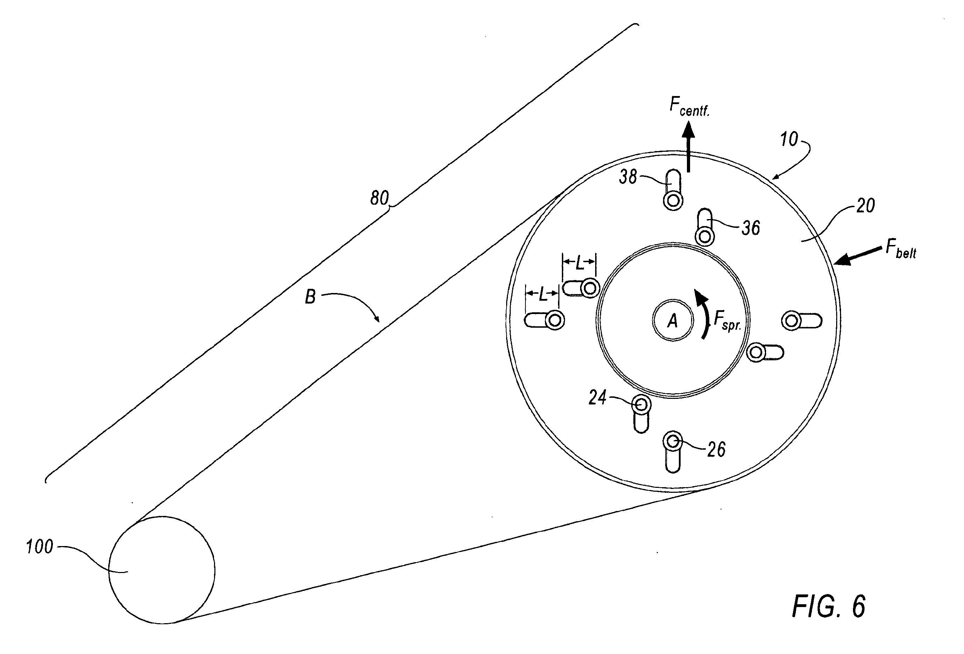

As described further below, variable drive apparatus 10 includes a plurality of sectors 18. In an embodiment, the sectors 18 can collectively function, for example, as a driven pulley. For instance, as generally illustrated in Figure 6, a plurality of sectors 18 may function as a driven pulley in connection with a drive mechanism 100 and belt **B.** Depending upon the desired configuration, the drive mechanism 100 may either drive the apparatus or be driven by the apparatus. The term "belt," as used herein, is used to encompass a belt, band, string, rope, chain, or other known means for transmitting rotational force or movement from one rotational mechanism to another.

In practice, a diameter and an outer circumference of apparatus 10 can be modified by changing the radial positions of sectors 18 relative to an axis, e.g., central axis **A.** The radial position of the sectors relative to axis **A** can be modified and/or controlled by changing or adjusting centrifugal forces (such as those associated with the rotation of the apparatus) acting upon the sectors 18.

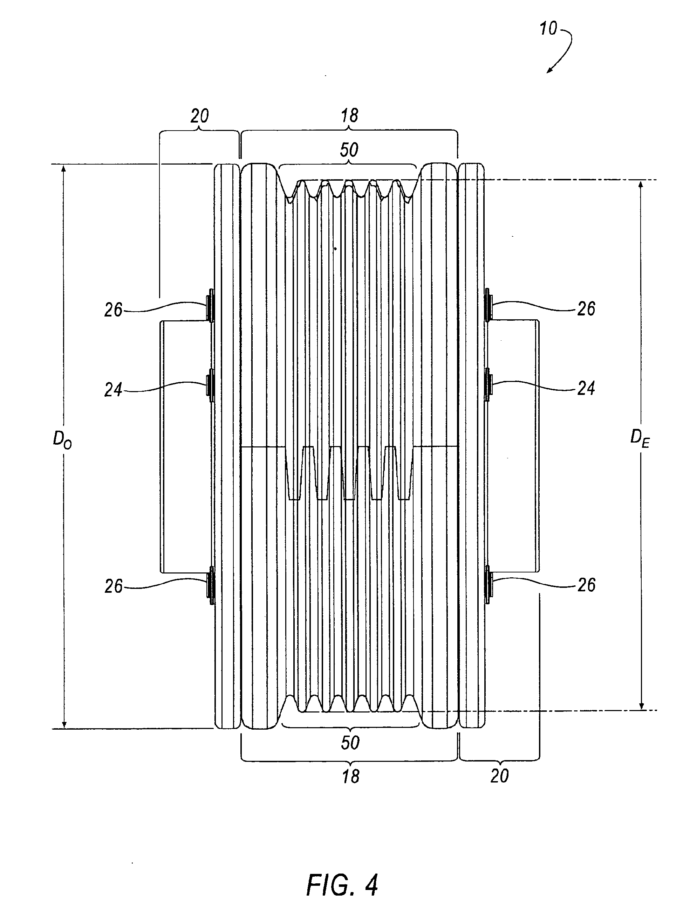

As a result of the radial position of the plurality of sectors 18, an associated outer diameter $D_O$ (e.g., measured at an outermost radial extent of the sectors) or an associated effective diameter $D_E$ (e.g. measured at a position where a belt could be positioned or seated), such as generally illustrated in Figure 4, may be changed and/or controlled. Further, as the diameter of the apparatus increases (or decreases), the outer circumference — whether related to the outer diameter $D_O$ or the effective diameter $D_E$ — correspondingly increases (or decreases). The ability to modify and/or control or variably adjust the diameter and circumference associated with the apparatus permits, among other things, the modification or control a drive ratio associated with an application. For example, in an embodiment of the invention, an apparatus can be employed to modify a drive ratio associated with a supercharger of a vehicle.

Referring to the embodiment of the invention illustrated in Figure 1, apparatus 10 includes a plurality of sectors 18 and a hub. It is noted that the present invention does not require the inclusion of all of the illustrated components, the same numbers of components shown, or even the same assembly or configuration of components.

The illustrated embodiment of the apparatus 10 in Figure 1 includes a plurality of sectors 18, a hub (shown in this embodiment comprising hub spring supports 11 and hub plates 12), and a plurality of radial control arms 14. Embodiments of the apparatus may also include one or more tension devices (shown in the illustrated embodiments comprising springs 16, which can be received by or connected to a hub spring support 11), end plates 20, and a plurality of associated linkages. Among other things, the tension device may comprise, for example, a conventional mechanism other than a spring for resiliently biasing the arms 14 in a given configuration. Further, in the illustrated embodiment, the associated linkages include a plurality of first linkage elements 22, a plurality of second linkage elements 24, and a plurality of third linkage elements 26. Linkage elements may comprise pins, pin-like structures, or other formations or protrusions. Among other things, linkage elements can serve to restrict certain movement of certain components. For example, linkage elements may be employed to ensure that certain connected or associated features only substantially move in a given direction (e.g., radially).

The hub includes one or more separate components positioned about axis A and is adapted for direct or indirect connection to each sector 18 and to another device or apparatus (not shown). In one embodiment of the presented invention, all of the sectors of the apparatus are connected or linked to the hub and the sectors are permitted to only move radially. Depending upon the desired application, the hub may be configured to receive and/or convey rotational forces to or from the apparatus 10.

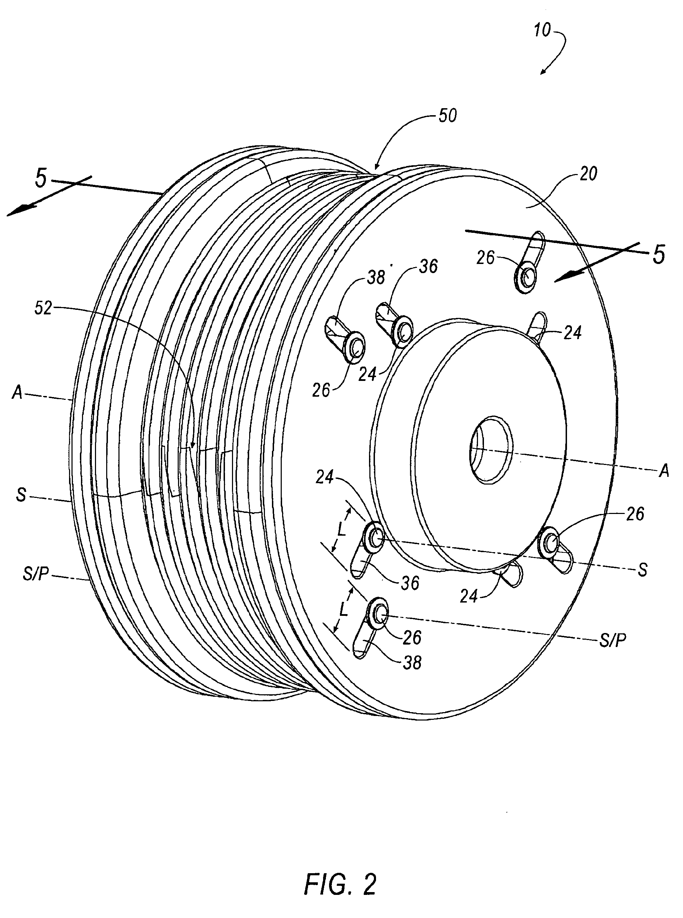

Again, while not limited to the exemplary configuration shown in Figure 1, each radial control arm 14 may include a first linkage element passage 28 and a second linkage element passage 30. Likewise, each sector 18 may include a first linkage element passage 32 and a second linkage element passage 34, and each end plate 20 may include a plurality of first linkage element passages 36 and a plurality of second linkage element passages 38. In an assembled configuration, such as generally shown in Figure 2, the apparatus can be positioned or fixed about axis **A**.

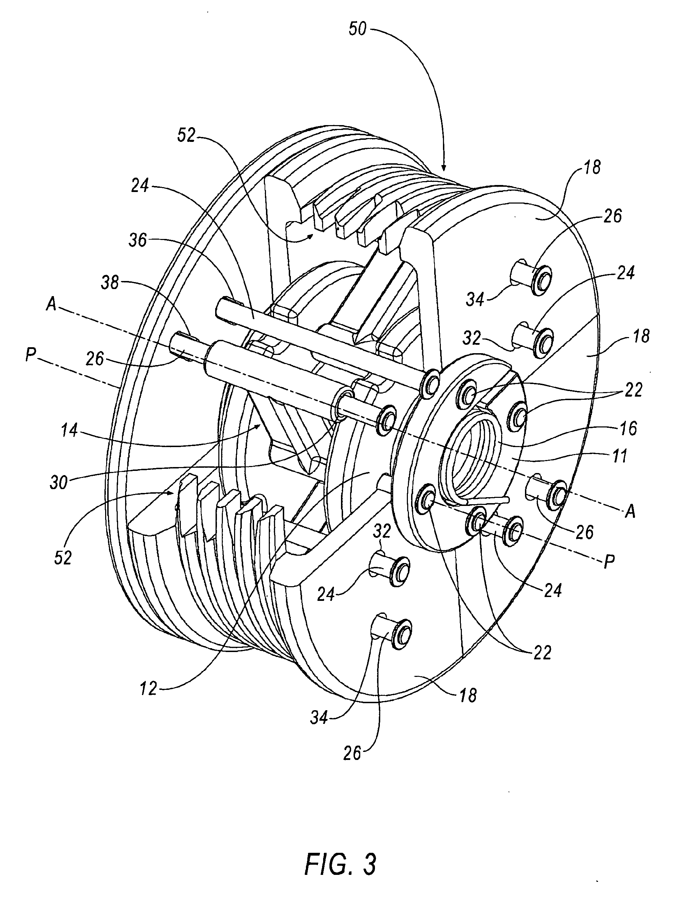

Referring to the exemplary embodiment illustrated in Figure 3, linkage elements 22 may extend through respective first linkage element passages 28 of control arms 14 and passages formed in respective hub spring supports 11 and hub plates 12. In operation, the first linkage elements 22 may pivotally connect the control arms 14 to the hub, such as, to the illustrated hub spring supports 11 and hub plates 12. Accordingly, first linkage elements 22 can occupy a plurality of passages that create fixed pivot axes **P** that are generally substantially parallel to axis **A.**

Referring to Figures 2 and 3, each of the second linkage elements 24 may extend through first linkage element passages 32 of the sectors 18 and first linkage element passages 36 of end plates 20. In operation, the second plurality of linkage elements 24 may slidably connect (in a radial direction) sectors 18 relative the associated end plates 20. Accordingly, the second linkage elements 24 may occupy a plurality of shiftable axes **S** (see, e.g., Figure 2) that permit adjustment of the positioning of elements 24 in a radial direction. As illustrated, the shiftable axes **S,** extend in a direction that is substantially parallel the axis **A.** The radial movement of each shiftable axis **S** is bound by the extents of a length **L** of the first linkage element passages 36 of the end plates 20. As illustrated, both first and second linkage element passages 36, 38 may comprise a substantially oval shape having a desirable length **L** for regulating the extent of the radial movement of sectors 18.

Also referring to Figures 2 and 3, if desired, third linkage elements 26 may extend through second passages 30 formed in control arms 14. The third linkage elements 26 may also extend through second passages 34 of sectors 18, as well as second linkage element passages 38 of end plates 20. In operation, third elements 26 may slidably connect (in a radial direction) sectors 18 relative the end plates 20 as similarly described above with respect to the second linkage elements 24. Additionally, the third linkage elements 26 may also pivotally connect control arms 14 relative to the sectors 18 and end plates 20. Accordingly, third linkage elements 26 may be described as occupying an axis **S/P** (see, e.g., Figure 2), for pivotally and slidably connecting control arms 14 and sectors 18 with respect to associated end plates 20.

Referring to Figures 6-8A, an embodiment of a variable drive system 80 is generally shown. The illustrated system 80 includes a variable drive apparatus 10, a belt **B,** and a drive mechanism 100, such as for example, a drive wheel or drive pulley. The drive mechanism 100 may, for example, be connected or attached to an engine crankshaft (not shown). When rotated or spun at a given speed, which in the instant embodiment may be related to and/or controlled by the rotation of the drive mechanism 100, the radial position of sectors 18 of apparatus 10 may be changed or adjusted relative the driven axis **A.** As described above, the radial movement of sectors 18 may limited or constrained by length **L** of first and second linkage element passages 36,38.

As previously described, the radial positioning of sectors 18 may be modified or adjusted in response to centrifugal forces associated with the apparatus 10. In Figure 6, a centrifugal force $F_{centrf}$ is generally shown. Centrifugal force $F_{centrf}$ is conceptually shown working in a radially outward direction against the radially inward force of the belt ($F_{belt}$) and the force of the spring ($F_{spr}$). When little or no centrifugal force $F_{centrf}$ is applied relative to sectors 18, the tension springs 16 can bias control arms 14 with a sufficient spring force $F_{spr}$ to substantially maintain sectors 18 in a radially contracted (i.e., substantially non-expanded) position.

Then, by application of rotation to the variable drive apparatus 10, the associated centrifugal force, $F_{centrf}$, may be applied to radially adjust, in associated synchronization, the position of sectors 18 in a desired radially expanded state (which may be within the parameters associated with the control arms 14 and end plates 20, such as previously described above).

A force-balance equation associated with the apparatus 10 is as follows:

$$F_{centrf.} + F_{belt} - F_{spr} = 0 \qquad (1)$$

$$[M*V2*R_g] + [M_b*V2*R - F_{BLT}] - [P_0 + C*(R-R_{min})] = 0$$

where: M is mass of all of the plurality of sectors 18,
V is the angular velocity,
Rg is the distance from axis A to the sector center of gravity,
$M_b$ is the mass of the belt B,
R is the radius from axis A to the outer surface of a sector 18,
$F_{BLT}$ is the belt tension force,
$P_0$ is the spring preload force at minimum expansion radius (i.e., when no centrifugal force is applied to the sectors 18),
C is the spring coefficient, and
$R_{min}$ is the minimum radius of the outer sector surface (i.e., when no centrifugal force is applied to the plurality of sectors).

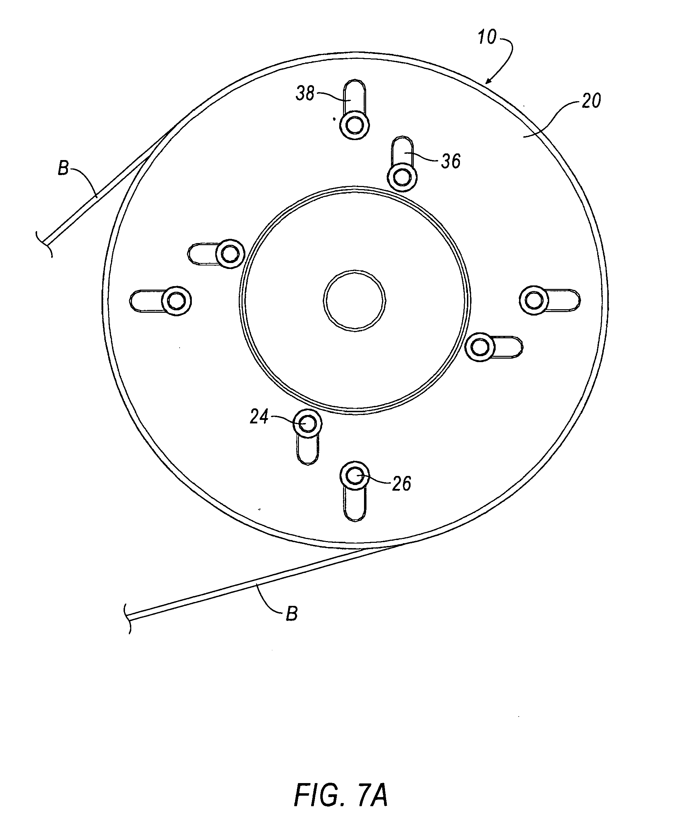

Referring to Figure 7A, at no or low rotational speeds or velocities, the spring force **$F_{spr.}$** combined with the belt force **$F_{belt}$** may exceed or overcome the centrifugal force **$F_{centrf.}$** (which is proportional to the weight of the plurality of sectors 18 and the square of the rotational speed of the variable drive mechanism 10). Accordingly, under such conditions, the sectors 18 will generally be in a radially contracted state (relative to axis **A**), thus, creating the smallest relative diameters (whether **$D_O$** and/or **$D_E$**) and functional outer circumference (such as used in connection with a belt) associated with the apparatus 10. With such a configuration, all other factors being the same, the variable drive apparatus 10 will typically provide the highest drive ratio.

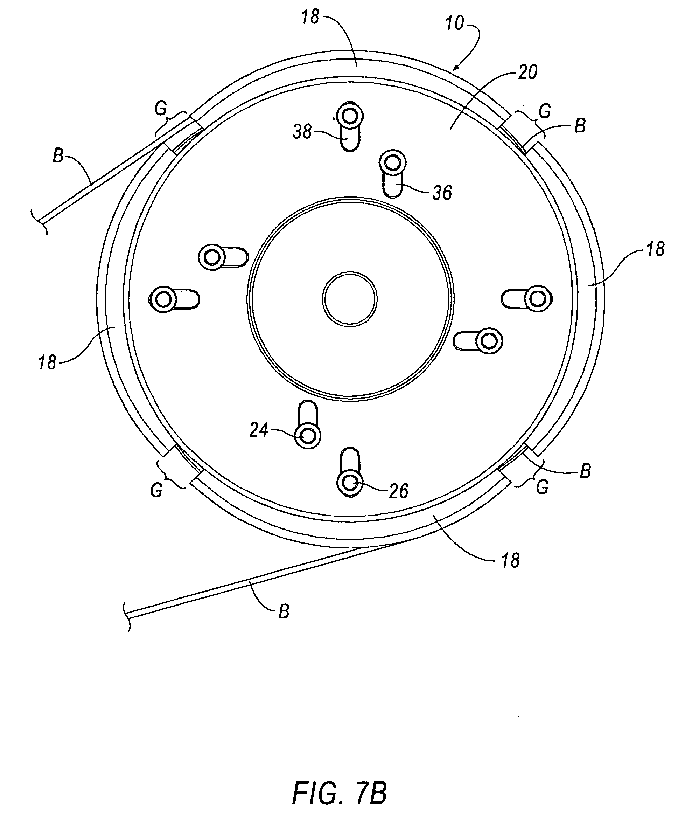

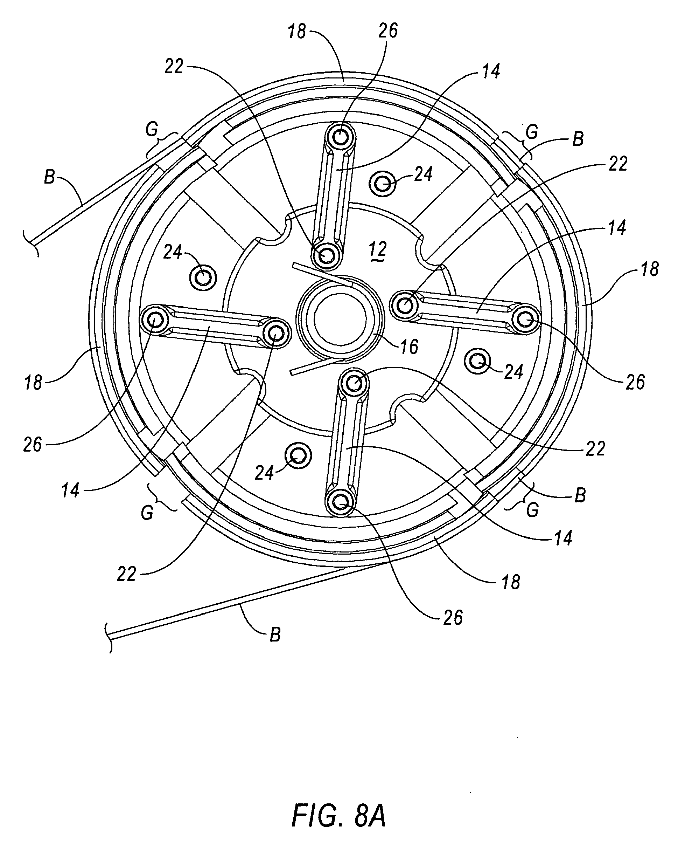

As generally illustrated in connection with Figures 7B and 8A, when the rotational speed of the variable drive apparatus 10 increases, the associated centrifugal force **$F_{centrf}$** that is generated with respect to the apparatus 10 eventually becomes greater than the combined forces of the spring **($F_{spr}$)** and the belt **($F_{belt}$)**. Accordingly, under these conditions, sectors 18 will move or expand radially outwardly from axis **A**. As the rotational speed of the apparatus 10 increases, sectors 18 continue to move radially outwardly (in response to the resultant forces) until their travel is physically impeded. For example, if first and/or second linkage element passages are employed, the outer radial expansion of the sectors may be limited by the travel limits associated with or imposed by the movement of the second and/or third linkage elements 24, 26 within the first and second linkage element passages 36, 38. Thus, as generally shown in Figure 8A, the diameter of the apparatus 10 (whether **$D_O$** and/or **$D_E$**) may be increased up to a given maximum. Such in the diameter of the apparatus will increase its associated outer circumference and reduce an associated drive ratio.

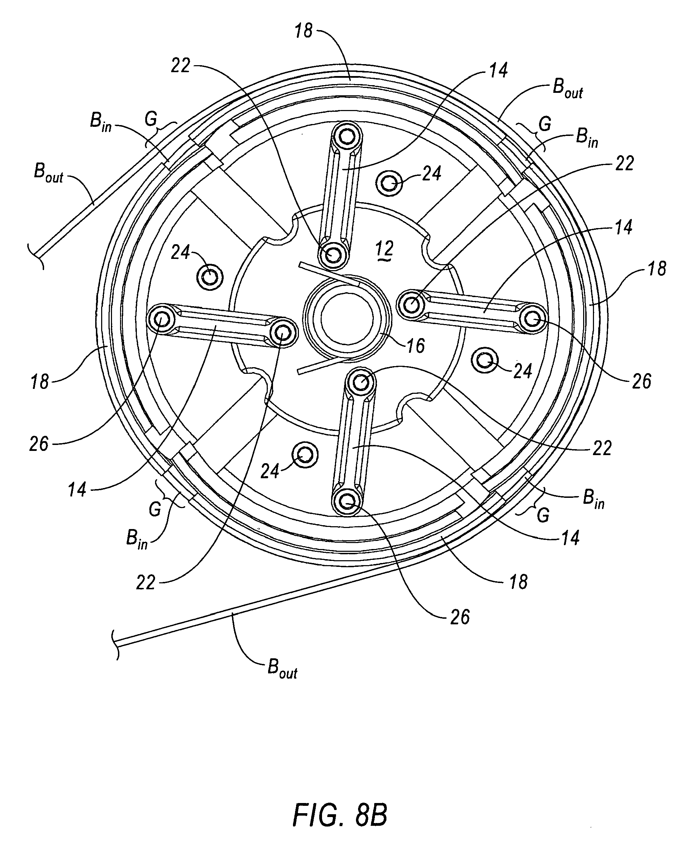

Referring to Figure 8B, an alternate embodiment is illustrated. The system includes a flexible belt **$B_{in}$** disposed about an outer surface of the apparatus. Flexible belt **$B_{in}$** can be positioned or otherwise disposed in a groove or channel 50 (see, e.g., Figures 1-5). Groove or channel 50 can be located between opposing sidewalls of the sectors 18 and can include or pass over gaps **G** that occur or form between sectors 18 when the sectors 18 move to an expanded radial state. As illustrated in Figure 8B, belt **$B_{in}$** may be circumferentially disposed in groove or channel 50 and wrapped around or substantially about the circumference of the apparatus 10 to cover the gaps **G**. With such a configuration, an outer drive belt **$B_{out}$** need not be directly disposed against the channel 50 as described above with respect to the belt B. Rather, the outer drive belt Bout may be positioned adjacent an outboard surface of the flexible inner belt $B_{in}$. Thus, interfacing surfaces, such as sector teeth 52 of the sectors 18, may be made less likely to interfere with or damage the outer belt **$B_{out}$**.

Although the apparatus 10 is shown with four control arms 14 and four sectors 18, it will be appreciated by those of skill in the art that an apparatus may include any desirable number of sectors and, if employed, corresponding control arms. Further, it is possible to include and employ more than one control arm in connection with one or more sectors, and the invention is not limited to a 1:1 correspondence between control arms and sectors.

In the illustrated exemplary embodiments, four sectors 18 are shown, each, in the contracted position, covering approximately 90° about axis A. However, the invention is not limited to the size and shapes of the sectors shown, and, further, while there may be some benefit from an operational and production standpoint (at least under certain conditions), the size, shape, and angular spacing of the sectors may be varied. However, as the number of sectors is increased, the sectors will typically be equally sized and angularly spaced to better ensure that the diameter of the apparatus is substantially concentric throughout its operation.

The present invention has been particularly shown and described with reference to the foregoing embodiments, which are merely illustrative of the best mode or modes for carrying out the invention. It should be understood by those skilled in the art that various alternatives to the embodiments of the invention described herein may be employed in practicing the invention without departing from the spirit and scope of the invention as defined in the following claims. It is intended that the following claims define the scope of the invention and that the method and apparatus within the scope of these claims and their equivalents be covered thereby. This description of the invention should be understood to include all novel and non-obvious combinations of elements described herein, and claims may be presented in this or a later application to any novel and non-obvious combination of these elements. Moreover, the foregoing embodiments are illustrative, and no single feature or element is essential to all possible combinations that may be claimed in this or a later application.

## Claims

1. A variable drive apparatus having an outer diameter, comprising:

   a hub positioned about an axis;
   a plurality of sectors that are movable in a radial direction relative to the axis; and
   one or more radial control arms connecting the sectors to the hub;

   wherein the outer diameter of the apparatus changes with the radial movement of the sectors.

2. The apparatus recited in claim 1, wherein at least one control arm connects each sector to a portion of the hub.

3. The apparatus recited in claim 1, wherein outer surfaces of the sectors form a circumferential channel or groove.

4. The apparatus recited in claim 1, including one or more end plates.

5. The apparatus recited in claim 4, wherein the one or more end plates include a linkage element passage.

6. The apparatus recited in claim 5, wherein at least one linkage element passage permits an associated element to move in a radial direction relative to the axis.

7. The apparatus recited in claim 1, including a tension device.

8. The apparatus recited in claim 7, wherein the tension device exerts a force that at least partially biases the sectors in a radially contracted state.

9. The apparatus recited in claim 7, wherein the tension device includes a spring.

10. The apparatus recited in claim 2, wherein each control arm is pivotally connected to one sector and is pivotally connected to the hub.

11. The apparatus recited in claim 1, wherein upon a sufficient increase in rotational velocity, a centrifugal force associated with the apparatus forces the sectors to expand radially outward from the axis.

12. The apparatus recited in claim 4, wherein the hub or one or more end plates includes a structural formation that restricts or impedes the radial expansion of the sectors from further radial expansion.

13. The apparatus recited in claim 12, wherein the structural formation includes an elongated hole, slot or other radially-extending guide path or ridge.

14. The apparatus recited in claim 1, including a flexible inner belt; the inner belt that is substantially wrapped about an outer circumference of the apparatus.

15. The apparatus recited in claim 1, including a means for restricting or impeding the radial expansion of the sectors beyond a set outer diameter.

16. The apparatus recited in claim 1, wherein the outer diameter of the apparatus is controlled by changing the rotational speed of the apparatus.

17. A variable drive apparatus having an outer diameter, comprising:

   a hub positioned about an axis;

a plurality of sectors that are movable in a radial direction relative to the axis, the outer diameter of the apparatus changing with the radial movement of the sectors;
a plurality of radial control arms connecting the sectors to the hub;
a pair of end plates including linkage element passages; and
a linkage element connecting each sector to at least one linkage element passage;

wherein the linkage element passage permits the associated linkage element to move in a radial direction relative to the axis.

18. A variable drive system, comprising:

a variable drive apparatus having an outer diameter; a hub positioned about an axis; a plurality of sectors that are movable in a radial direction relative to the axis; and one or more radial control arms connecting the sectors to the hub, wherein the outer diameter of the apparatus changes with the radial movement of the sectors; and
a drive belt;

wherein an inner portion of the belt engages an outer surface of the variable drive apparatus.

19. The system recited in claim 18, including a flexible inner belt that is substantially wrapped about an outer circumference of the apparatus.

20. The system recited in claim 18, including a drive mechanism.

21. The system recited in claim 20, wherein the drive mechanism conveys rotational forces to the variable drive apparatus or the variable drive apparatus conveys rotational forces to the drive mechanism.

FIG. 1

FIG. 2

FIG. 3

10

FIG. 4

FIG. 5

FIG. 6

EP 1 760 369 A2

FIG. 7A

*FIG. 7B*

FIG. 8A

FIG. 8B